# NOUVEAU FASCICULE DE BREVET EUROPEEN

(11) **EP 1 201 862 B2**
(45) Date de publication et mention de la décision concernant l'opposition: **27.07.2011**
(45) Mention de la délivrance du brevet: 10.08.2005
(21) Numéro de dépôt: 01402689.2
(22) Date de dépôt: 18.10.2001
(51) Int. Cl.: E05F 11/48

(54) **Système de fixation d'un lève-vitre sur une porte sans cadre de véhicule**
Vorrichtung zur Befestigung von Fensterhebern an Fahrzeugtüren
Arrangement for fixing window regulators at vehicle doors

(30) Priorité: 24.10.2000 FR 0013602
(43) Date de publication de la demande: 02.05.2002
(73) Titulaire: ArvinMeritor Light Vehicle Systems-France, 45600 Sully sur Loire (FR)
(72) Inventeur: Cardine, Patrice, 45100 Orléans (FR); Chevy, Denis, 45510 Neuvy en Sullias (FR)
(74) Mandataire: Cardy, Sophie Marie

(56) Documents cités:
- EP-A- 1 201 862
- EP-B1- 0 613 797
- WO-A-95/01492
- DE-A- 19 821 075
- DE-A1- 3 803 118
- DE-A1- 19 704 593
- DE-A1- 19 856 460
- DE-C1- 3 921 289
- DE-T2- 69 215 103
- DE-U- 9 307 599
- JP-A- 04 197 829
- US-A- 4 793 099

## Description

L'invention concerne le domaine des lève-vitres montés sur des portes sans cadre de véhicule.

Elle concerne plus précisément un système de fixation d'un lève-vitre sur une porte sans cadre de véhicule, ladite porte étant équipée d'une vitre fixe au-dessus de son extrémité avant et d'une glissière de guidage du bord avant d'une vitre mobile, ladite glissière ayant une partie supérieure à l'arrière de la vitre fixe et une partie inférieure fixée dans ladite porte, ledit lève-vitre comportant un rail de guidage avant et un rail de guidage arrière parallèles à ladite glissière et montés sur la porte, deux curseurs qui supportent la vitre mobile et qui peuvent coulisser respectivement sur le rail de guidage avant et le rail de guidage arrière, un système de câbles reliés aux curseurs et passant sur des moyens de renvoi prévus aux extrémités des rails et des moyens d'entraînement des câbles pour faire monter ou descendre la vitre mobile.

Sur les véhicules actuels, comportant des portes sans cadre, tels que les cabriolets, on utilise des lève-vitres du type "double lift" qui comportent deux rails de guidage, du fait que ces portes ont en général une grande longueur. Les câbles sont disposés dans des gaines, car il est nécessaire de pouvoir écarter les rails en fonction de la longueur de la porte;

Lorsque la porte comporte dans sa partie supérieure avant une vitre fixe, une glissière de guidage du bord avant de la vitre mobile est fixée sur la porte. Cette glissière comporte une partie supérieure qui s'étend au-dessus de la porte et est disposée à l'arrière de la vitre fixe, et une partie inférieure disposée dans la porte et fixée à la structure de cette dernière par ses extrémités supérieure et inférieure. La partie supérieure de la glissière retient le bord arrière de la vitre fixe et assure la continuité des deux vitres lorsque la vitre mobile est en position haute.

En général, l'extrémité supérieure de la partie inférieure de la glissière, et les extrémités supérieures des rails de guidage sont fixées sur la ceinture supérieure de renforcement de la porte au moyen de vis coopérant avec des trous. Ces trous réduisent la capacité d'absorption des chocs lors des crash tests.

Les extrémités inférieures de la glissière et des deux rails de guidage sont fixées sur l'armature de porte de manière ajustable dans le sens transversal de la porte afin de tenir compte des tolérances de fabrication.

Or, pour éviter des frictions lors du mouvement de la vitre mobile et les hyperstatismes, il est nécessaire que le parallélisme entre la glissière et les deux rails de guidage soit aussi parfait que possible.

Le réglage des moyens de fixation inférieurs de la glissière et des deux rails de guidage est réalisé manuellement lors de l'assemblage de la porte, ce qui nécessite beaucoup de temps de main-d'oeuvre et est coûteux.

Le premier but de l'invention est de simplifier le réglage du parallélisme entre la glissière et les rails de guidage.

Le deuxième but de l'invention est de diminuer le nombre de points de fixation de la glissière et des deux rails et guidage sur la porte afin d'améliorer les capacités structurales de cette dernière.

L'invention atteint son but par les caractéristiques de la revendication 1.

Selon l'invention, le rail avant est fixé sur la glissière par des moyens de fixation.

Ainsi grâce à l'invention, on assure un parallélisme parfait entre la glissière et le rail avant, si besoin est, avant le montage de la glissière et du lève-vitre sur la porte.

Les extrémités supérieures du rail avant et de la partie inférieure de la glissière étant fixes l'une par rapport à l'autre, seule l'extrémité supérieure de la partie inférieure de la glissière a besoin d'être fixée au moyen d'une vis coopérant avec un trou ménagé dans la ceinture supérieure de la porte. L'élimination d'un trou améliore la capacité structurale de cette ceinture.

Le réglage des extrémités inférieures de la glissière et des rails avant et arrière dans le sens transversal de la porte se réduit au réglage de deux points, au lieu de trois comme dans l'état de la technique, car le rail avant reste parallèle à la glissière.

L'opération de mise en position de la glissière entraîne une mise en place automatique du rail avant. Il n'y a plus qu'à régler la position de l'extrémité inférieure du rail arrière.

D'autres avantages et caractéristiques de l'invention ressortiront à la lecture de la description suivante faite à titre d'exemple et en référence aux dessins annexés dans lesquels :
la figure 1 est une vue latérale d'une porte sans cadre de véhicule automobile, selon l'état de la technique, qui comporte une vitre fixe à l'avant et une vitre mobile à l'arrière, cette vitre mobile étant entraînée par un lève-vitre dit "double lift" et coulissant dans une glissière avant, et
la figure 2 est une vue latérale d'une porte sans cadre de véhicule automobile selon l'invention, qui comporte une vitre avant fixe et une vitre arrière mobile entraînée par un lève-vitre dit "double lift" et coulissant dans une glissière avant.

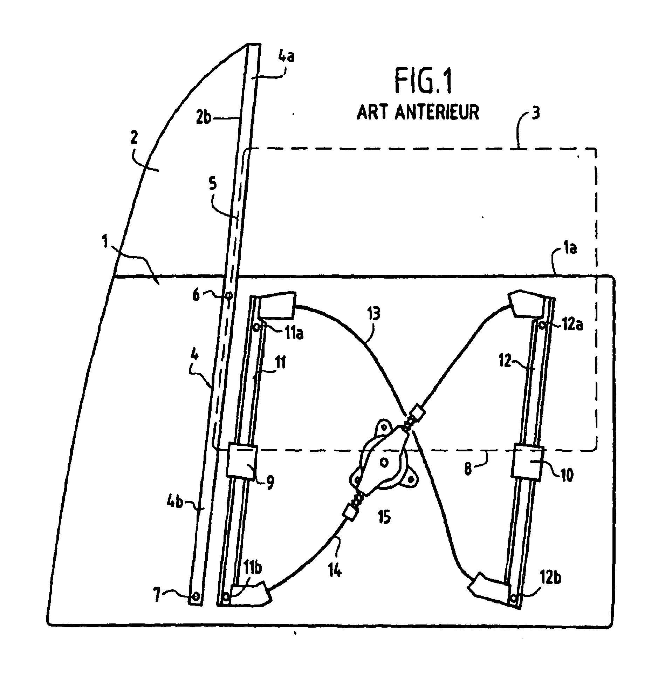

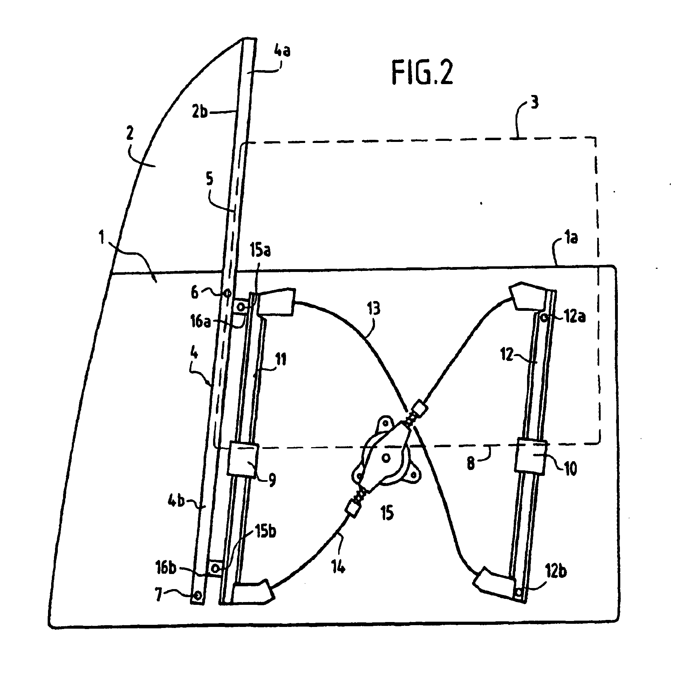

Les figures 1 et 2 montrent une porte de véhicule 1 sans cadre qui comporte à l'avant une vitre fixe 2 et à l'arrière une vitre mobile 3.

Une glissière de guidage 4 du bord avant 5 de la vitre mobile 3 est interposée à l'avant du chemin de déplacement sensiblement vertical de la vitre mobile 3. Cette glissière de guidage 4 comporte une partie supérieure 4a qui s'étend au-dessus du bord supérieur 1a de la porte 1 et est interposée entre le bord arrière 2b de la vitre fixe 2 et le bord avant 5 de la vitre mobile 3 en position de fermeture, et une partie inférieure 4b logeant dans la porte 1 et fixée à l'armature interne de la porte 1 par son extrémité supérieure 6 et son extrémité inférieure 7.

Le bord inférieur 8 de la vitre mobile 3 est fixé sur deux curseurs 9 et 10 pouvant coulisser respectivement sur un rail de guidage avant 11 et un rail arrière 12 parallèles à la partie inférieure 4b de la glissière 4. Un système de câbles 13, 14, reliés aux curseurs 9 et 10 et passant par des poulies de renvoi non représentées et prévues aux extrémités supérieure et inférieure des rails de guidage 11 et 12, et reliés à des moyens d'entraînement constitués par un ensemble moteur 15 placé entre les rails de guidage 11 et 12, permet de déplacer à l'unisson les deux curseurs 9 et 10 supportant la vitre mobile 3.

Dans l'état actuel de la technique, montré sur la figure 1, le rail avant 11 est fixé à la porte 1 par son extrémité supérieure 11a et son extrémité inférieure 11b. De même, le rail arrière 12 est fixé à la porte 1 par son extrémité supérieure 12a et son extrémité inférieure 12b. L'extrémité supérieure 6 de la partie inférieure 4b de la glissière 4 et les extrémités supérieures 11a et 12a des rails 11 et 12 sont fixées sur la ceinture supérieure de renforcement de la porte 1. L'extrémité inférieure 7 de la glissière 4 et les extrémités inférieures 11b et 12b des rails de guidage 11 et 12 sont fixées de manière ajustable sur l'armature de la porte 1.

Selon l'invention, ainsi que cela est montré sur la figure 2, le rail avant 11 et la partie inférieure 4b de la glissière 4 sont liés rigidement à l'aide de moyens de fixation 15a et 15b, des vis par exemple, coopérant avec des trous ménagés dans l'une des pièces, rail avant 11 ou partie inférieure 4b, et dans des bras 16a et 16b qui s'étendent longitudinalement à partir de l'autre pièce, partie inférieure 4b ou rail avant 11. Le rail avant 11 est ainsi, après montage sur la glissière 4 et par construction, toujours parallèle à la partie inférieure 4b de la glissière 4. L'extrémité supérieure 6 de la partie inférieure 4b de la glissière 4 et l'extrémité supérieure 12a du rail arrière 12 sont fixées comme dans l'état de la technique actuelle sur la ceinture supérieure de renforcement de la porte 1. L'extrémité inférieure 7 de la glissière 4 et l'extrémité inférieure 12b du rail 12b sont fixées de manière ajustable sur l'armature de la porte 1, afin de permettre le réglage du parallélisme entre le rail arrière 12 et la glissière 4. Le réglage du parallélisme est simplifié, car il suffit de régler l'extrémité inférieure 12b, dans le sens transversal de la porte 1 après que l'extrémité inférieure 7 de la glissière 4 a été mise en place.

## Revendications

1. Système de fixation d'un lève-vitre sur une porte (1) sans cadre de véhicule, ladite porte (1) étant équipée d'une vitre fixe (2) au-dessus de son extrémité avant et d'une glissière de guidage (4) du bord avant (5) d'une vitre mobile (3), ladite glissière (4) ayant une partie supérieure (4a) à l'arrière de la vitre fixe (2) et une partie inférieure (4b) fixée dans ladite porte (1), ledit lève-vitre comportant un rail de guidage avant (11) et un rail de guidage arrière (12) parallèles à ladite glissière (4) et montés sur la porte (1), deux curseurs (9, 10) qui supportent la vitre mobile (3) et qui peuvent coulisser respectivement sur le rail de guidage avant (11) et le rail de guidage arrière (12), un système de câbles (13, 14) reliés aux curseurs (9, 10) et passant sur des moyens de renvoi prévus aux extrémités des rails de guidage (11, 12) et des moyens d'entraînement (15) des câbles (13, 14), **caractérisé par le fait que** le rail avant (11) est rigidement lié à la partie inférieure (4b) de la glissière (4) à l'aide de moyens de fixation (15a,15b), coopérant avec des trous ménagés dans l'une des pièces parmi le rail avant (11) et la partie inférieure (4b) de la glissière (4) et dans des bras (16a, 16b) qui s'étendent longitudinalement à partir de l'autre pièce parmi la partie inférieure (4b) de la glissière (4) et le rail avant (11), **par le fait que** seulement l'extrémité supérieure (6) de la partie inférieure (4b) de la glissière (4) et l'extrémité supérieure (12a) du rail arrière (12) sont fixées sur la ceinture supérieure de renforcement de la porte (1), **par le fait que** l'extrémité inférieure (7) de la glissière (4) et l'extrémité inférieure (12b) du rail arrière (12) sont fixées de manière ajustable sur l'armature de la porte (1).

## Claims

1. System for fixing a window regulator on a frameless door (1) of a vehicle, said door (1) being equipped with a fixed window pane (2) above its front end and with a slideway (4) for guiding the front edge (5) of a mobile pane (3), said slideway (4) having an upper part (4a) to the rear of the fixed pane (2) and a lower part (4b) fixed in said door (1), said window regulator comprising a front guide rail (11) and a rear guide rail (12) parallel to said slideway (4) and mounted on the door (1), two sliders (9, 10) which support the mobile pane (3) and which may slide respectively on the front guide rail (11) and the rear guide rail (12), a system of cables (13, 14) connected to the sliders (9, 10) and passing over return means provided at the ends of the guide rails (11, 12) and means (15) for driving the cables (13, 14),
the system being **characterized by** the fact that the front rail (11) is rigidly connected to the lower part (4b) of the slideway (4) by fixing means (15a, 15b) that cooperate with holes provided in one of the pieces among the front rail (11) and the lower part (4b) of the slideway (4), and in arms (16a, 16b) that extend longitudinally from the other piece among the lower part (4b) of the slideway (4) and the front rail (11), by the fact that only the upper end (6) of the lower part (4b) of the slideway (4) and the upper end (12a) of the rear rail (12) are fixed to the upper reinforcement belt of the door (1), and by the fact that the lower end (7) of the slideway (4) and the lower end (12b) of the rear rail (12) are fixed in adjustable manner to the framing of the door (1).

## Patentansprüche

1. System zum Befestigen eines Fensterhebers an einer rahmenlosen Fahrzeugtür (1),
wobei die Tür (1) mit einer festen Scheibe (2) oberhalb ihres vorderen Endes und mit einer Gleitschiene (4) zum Führen der Vorderkante (5) einer beweglichen Scheibe (3) ausgestattet ist,
wobei die Gleitschiene (4) einen oberen Teil (4a) an der Rückseite der festen Scheibe (2) sowie einen in der Tür (1) befestigten unteren Teil (4b) aufweist,
wobei der Fensterheber eine vordere Führungsschiene (11) und eine hintere Führungsschiene (12), die parallel zu der Gleitschiene (4) verlaufen und an der Tür (1) angebracht sind, zwei Schieber (9, 10), welche die bewegliche Scheibe (3) tragen und auf der vorderen Führungsschiene (11) bzw. auf der hinteren Führungsschiene (12) gleiten können, ein System von Kabeln (13, 14), die mit den Schiebern (9, 10) verbunden sind und über an den Enden der Führungsschienen (11, 12) vorgesehene Umlenkmittel laufen, sowie Mittel (15) zum Antreiben der Kabel (13, 14) aufweist,
**dadurch gekennzeichnet,**
**daß** die vordere Schiene (11) mit dem unteren Teil (4b) der Gleitschiene (4) mit Hilfe von Befestigungsmitteln (15a, 15b) starr verbunden ist, die mit Bohrungen zusammenwirken, welche in einem der Teile von der vorderen Schiene (11) und dem unteren Teil (4b) der Gleitschiene (4) sowie in Armen (16a, 16b) ausgebildet sind, die sich ausgehend von dem anderen Teil von dem unteren Teil (4b) der Gleitschiene (4) und der vorderen Schiene (11) in Längsrichtung erstrecken,
**daß** nur das obere Ende (6) des unteren Teils (4b) der Gleitschiene (4) und das obere Ende (12a) der hinteren Schiene (12) am oberen Gürtel zur Verstärkung der Tür (1) befestigt sind,
**daß** das untere Ende (7) der Gleitschiene (4) und das untere Ende (12b) der hinteren Schiene (12) einstellbar an der Umkleidung der Tür (1) befestigt sind.
